(19) Europäisches Patentamt
European Patent Office
Office européen des brevets

(11) **EP 3 682 204 B1**

(12) **EUROPÄISCHE PATENTSCHRIFT**

(45) Veröffentlichungstag und Bekanntmachung des Hinweises auf die Patenterteilung:
**19.04.2023   Patentblatt 2023/16**

(21) Anmeldenummer: **18782319.0**

(22) Anmeldetag: **14.09.2018**

(51) Internationale Patentklassifikation (IPC):
**G01J 4/04** (2006.01)    **G01J 4/00** (2006.01)

(52) Gemeinsame Patentklassifikation (CPC):
**G01J 4/04;** G01J 2004/005

(86) Internationale Anmeldenummer:
**PCT/EP2018/074923**

(87) Internationale Veröffentlichungsnummer:
**WO 2019/053207 (21.03.2019 Gazette 2019/12)**

(54) **VORRICHTUNG UND VERFAHREN ZUR BESTIMMUNG EINES POLARISATIONSZUSTANDES EINER ELEKTROMAGNETISCHEN WELLE**

DEVICE AND METHOD FOR DETERMINING A POLARISATION STATE OF AN ELECTROMAGNETIC WAVE

DISPOSITIF ET PROCÉDÉ DE DÉTERMINATION DE L'ÉTAT DE POLARISATION D'UNE ONDE ÉLECTROMAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.09.2017   DE 102017216358**

(43) Veröffentlichungstag der Anmeldung:
**22.07.2020   Patentblatt 2020/30**

(73) Patentinhaber: **Fraunhofer-Gesellschaft zur Förderung
der angewandten Forschung e.V.
80686 München (DE)**

(72) Erfinder: **BAIER, Moritz
10715 Berlin (DE)**

(74) Vertreter: **Maikowski & Ninnemann
Patentanwälte Partnerschaft mbB
Postfach 15 09 20
10671 Berlin (DE)**

(56) Entgegenhaltungen:
- **GHOSH SAMIR ET AL: "Integrated stokes vector analyzer on InP", 2016 21ST OPTOELECTRONICS AND COMMUNICATIONS CONFERENCE (OECC) HELD JOINTLY WITH 2016 INTERNATIONAL CONFERENCE ON PHOTONICS IN SWITCHING (PS), IEICE, 3. Juli 2016 (2016-07-03), Seiten 1-3, XP032986234, [gefunden am 2016-10-26] in der Anmeldung erwähnt**
- **SAMIR GHOSH ET AL: "Polarization-analyzing circuit on InP for integrated Stokes vector receiver", OPTICS EXPRESS, Bd. 25, Nr. 11, 29. Mai 2017 (2017-05-29), Seite 12303, XP055538771, US ISSN: 2161-2072, DOI: 10.1364/OE.25.012303**
- **Lm (luc) Augustin ET AL: "Polarization handling in photonic integrated circuits", , 2. Juni 2008 (2008-06-02), XP055539279, DOI: 10.6100/IR634815 ISBN: 978-90-38-61854-8 Gefunden im Internet: URL:https://pure.tue.nl/ws/files/3219400/200810694.pdf [gefunden am 2019-01-08]**

- Moritz Friedrich Baier: "Polarization multiplexed photonic integrated circuits for 100 Gbit/s and beyond", , 1 January 2018 (2018-01-01), XP055538718, DOI: 10.14279/DEPOSITONCE-7286 Retrieved from the Internet: URL:https://www.researchgate.net/profile/M_Baier/publication/327319469_Polarization_multiplexed_photonic_integrated_circuits_for_100_Gbits_and_beyond/links/5b881ca9299bf1d5a73212d0/Polarization-multiplexed-photonic-integrated-circuits-for-100-Gbit-s-and-beyond.pdf [retrieved on 2019-01-07]

**Beschreibung**

Die Erfindung betrifft eine Vorrichtung zur Bestimmung eines Polarisationszustandes einer elektromagnetischen Welle gemäß dem Oberbegriff des Anspruchs 1 sowie ein Verfahren zur Bestimmung eines Polarisationszustandes einer elektromagnetischen Welle gemäß dem Oberbegriff des Anspruchs 15.

Aus dem Stand der Technik sind Polarimeter bekannt, die dazu dienen, den Polarisationszustand einer elektromagnetischen Welle, insbesondere einer Lichtwelle, zu bestimmen. Insbesondere können mit einem Polarimeter die den Polarisationszustand kennzeichnenden Stokes-Parameter S1, S2, S3 ermittelt werden. Die bekannten Polarimeter weisen jedoch diskrete optische (z.B. faseroptische) Bauteile, insbesondere verstellbare Polarisatoren, auf. Derartige Bauteile können mechanische Instabilitäten aufweisen, die zu einer Beeinträchtigung der Messgenauigkeit führen können. Darüber hinaus ist zwar aus den Artikeln S. Ghosh et al, "Integrated Stokes Vector Analyzer on InP", 2016, 21st OptoElectronics and Communications Conference (OECC) und S. Ghosh et al., "Polarization-analyzing circuit on InP for integrated Stokes vector receiver", OPTICS EXPRESS, Bd. 25, Nr. 11, 29. Mai 2017 (2017-05-29), Seite 12303 ein optisch-integriert aufgebautes Polarimeter bekannt. Die Herstellung dieses Polarimeters ist jedoch komplex und damit teuer.

Das der Erfindung zugrunde liegende Problem besteht darin, eine Möglichkeit zur möglichst genauen und auf möglichst einfache Weise realisierbaren Bestimmung eines Polarisationszustandes anzugeben.

Dieses Problem wird durch die Bereitstellung der Vorrichtung mit den Merkmalen des Anspruchs 1 und des Verfahrens mit den Merkmalen des Anspruchs 15 gelöst. Weiterbildungen der Erfindung sind in den abhängigen Ansprüchen angegeben.

Danach wird eine Vorrichtung zur Bestimmung eines Polarisationszustandes einer elektromagnetischen Welle bereitgestellt, mit

- einem Leistungsteiler, der eine elektromagnetische Eingangswelle in mindestens drei Teilwellen aufteilt;
- mindestens drei Polarisationskonvertern zum Verändern des Polarisationszustandes der Teilwellen, wobei jeweils einer der Polarisationskonverter einer der drei Teilwellen zugeordnet ist; und
- einem Ausgangskoppler, dem die Teilwellen nach Durchlaufen des jeweiligen Polarisationskonverters zugeführt werden und der mindestens drei Ausgänge aufweist, wobei der Ausgangskoppler so ausgebildet und die Polarisationskonverter derart angeordnet und konfiguriert sind, dass aus den Ausgängen des Ausgangskopplers austretende Ausgangswellen eine Intensität aufweisen, die jeweils (z.B. linear, insbesondere proportional) abhängig von einem der Stokes-Parameter der Eingangswelle sind.

Über die Messung der Intensitäten der drei Ausgangswellen können somit die drei Stokes-Parameter S1, S2, S3 und damit der Polarisationszustand der Eingangswelle bestimmt werden, wobei insbesondere aus jeder der Ausgangswellen jeweils genau einer der Stokes-Parameter S1, S2, S3 ermittelt wird. Die Stokes-Parameter S0, S1, S2, S3 sind mittels der Amplitude $E_{TE}$ und $E_{TM}$ des TE- bzw. TM-Anteils der elektromagnetischen Eingangswelle wie folgt definiert:

$$S_1 = |E_{TE}|^2 - |E_{TM}|^2, \ S_2 = 2E_{TE}E_{TM}cos\Delta, \ S_3 = 2E_{TE}E_{TM}sin\Delta, \ S_0 = \sqrt{S_1^2 + S_2^2 + S_3^2}$$

Hierbei bezeichnet $\Delta$ die Differenz der Phasen des TE- und des TM-Anteil der Welle. Bei der zu untersuchenden Eingangswelle handelt es sich insbesondere um eine Lichtwelle. Insbesondere entstehen die Ausgangswellen mit einer jeweils von einem der Stokes-Parameter (insbesondere linear) abhängigen Intensität (Ausgangsintensität) allein durch das Zusammenwirken der Polarisationskonverter und des Ausgangskopplers sowie unter Einhaltung jeweils vorgegebener Abstände der Polarisationskonverter von dem Ausgangskoppler. Entsprechend ist es denkbar, dass die Ausgangswellen detektiert werden, ohne dass sie zuvor einen Polarisationsfilter durchlaufen haben. Die von den Stokes-Parameter abhängigen Ausgangsintensitäten entstehen somit insbesondere allein durch gezielte Interferenz der a den Polarisationskonvertern austretenden und eine vorgegebene Weglänge (nämlich den jeweiligen Abstand zwischen dem Polarisationskonverter und dem Ausgangskoppler) zurücklegenden Teilwellen.

Wie erwähnt sind die Intensitäten der Ausgangswellen beispielsweise linear abhängig von jeweils einem der Stokes-Parameter der Eingangswelle. Denkbar ist natürlich auch ein anderer funktionaler Zusammenhang zwischen den Intensitäten der Ausgangswellen und den Stokes-Parametern der Eingangswelle. Beispielsweise ist die Intensität zumindest einer ersten Ausgangswelle (insbesondere nur) von den Stokes-Parametern S0 und S1, die Intensität zumindest einer zweiten Ausgangswelle (insbesondere nur) von den Stokes-Parametern S0 und S2 und die Intensität zumindest einer dritten Ausgangswelle (insbesondere nur) von den Stokes-Parametern S0 und S3 abhängig.

Gemäß einer Ausgestaltung der Erfindung werden die aus dem Leistungsteiler (Splitter) austretenden Teilwellen jeweils über einen Wellenleiter in den zugehörigen Polarisationskonverter eingekoppelt und/oder jeweils mit einem Wellenleiter von dem Polarisationskonverter zu dem Ausgangskoppler geleitet.

Bei den Wellenleitern handelt es sich beispielsweise jeweils um optisch-integrierte Wellenleiter. Derartige integrierte Wellenleiter werden durch Strukturierung von auf einem Substrat angeordneten Materialschichten (z.B. Halbleiterschichten) erzeugt.

Möglich ist auch, dass die Wellenleiter eine von Null verschiedene Doppelbrechung aufweisen. Die Doppelbrechung der Wellenleiter kann insbesondere dazu genutzt werden, eine vorgebbare Veränderung der Phasendifferenz zwischen dem TE- und dem TM-Anteil der Teillichtwellen zu erzeugen.

Beispielsweise ist die erfindungsgemäße Vorrichtung zumindest teilweise in Form eines monolithisch integrierten Bauelementes (z.B. eines Halbleiterbauelementes) ausgebildet, wobei insbesondere der Leistungsteiler, die Polarisationskonverter, der Ausgangskoppler und die erwähnten Wellenleiter in Form von integrierten Bauelementen realisiert sind. Möglich ist, dass die erfindungsgemäße Vorrichtung in III-V- oder SOI (Silicon-on-Insulator) -Technologie realisiert ist, d.h. durch Strukturierung von Materialschichten, die auf einem Substrat aus einem III-V-Halbleiter bzw. auf einem mit einer Siliziumschicht versehenen Substrat aus einem elektrisch isolierenden Material angeordnet sind.

Die monolithische Integration kann die Herstellungskosten reduzieren und ermöglicht insbesondere kompakte Abmessungen der Vorrichtung (z.B. Chipgrößen von weniger als $2 \times 0{,}25 \text{ mm}^2$). Des Weiteren kann sich die optomechanische Stabilität der Vorrichtung erhöhen; insbesondere, da nur eine optische Kopplungsstelle zwischen einem Messobjekt und der Vorrichtung existiert.

Bei dem Leistungsteiler handelt es sich z.B. um einen $1 \times 3$-Koppler. Denkbar ist, dass der Leistungsteiler in Form eines (insbesondere optisch integrierten) MMI (Multi-Mode-Interference)-Kopplers ausgebildet ist. Darüber hinaus kann der Leistungsteiler so ausgebildet sein, dass die austretenden Teilwellen zumindest näherungsweise den gleichen Polarisationszustand und/oder zumindest näherungsweise die gleiche Intensität, nämlich insbesondere ein Drittel der Intensität der Eingangswelle, aufweisen.

Der Ausgangskoppler ist insbesondere in Form eines $3 \times 3$-Kopplers ausgebildet, wobei es sich z.B. um einen MMI-Koppler handelt.

Die Erfindung ist jedoch nicht auf eine bestimmte Ausgestaltung des Leistungsteilers und/oder des Ausgangskopplers festgelegt. Denkbar ist insbesondere, dass der Leistungsteiler mehr als drei (z.B. vier, fünf oder sechs) Ausgänge und der Ausgangskoppler entsprechend mehr als drei Eingänge und Ausgänge (z.B. jeweils vier, fünf oder sechs) umfasst, d.h. die erfindungsgemäße Vorrichtung mehr als drei Pfade aufweist. Beispielsweise wird als Leistungsteiler ein $N \times N$- Koppler (zum Beispiel ein $4 \times 4$-, $5 \times 5$- oder $6 \times 6$-Koppler) oder ein $1 \times N$-Koppler und/oder als Ausgangskoppler ein $N \times N$- Koppler (zum Beispiel ebenfalls ein $4 \times 4$-, $5 \times 5$ oder $6 \times 6$-Koppler) verwendet. Derartige Leistungsteiler bzw. Ausgangskoppler können ebenfalls als MMI ausgebildet sein.

Gemäß einer anderen Ausgestaltung der Erfindung ist jedem Ausgang des Ausgangskopplers ein Empfänger zum Empfang jeweils einer der Ausgangswellen zugeordnet. Bei den Empfängern handelt es sich jeweils insbesondere um eine Fotodiode. Möglich ist, dass die Fotodioden ebenfalls als integriert-optische Bauelementes ausgebildet sind. Bei einer voll monolithisch Ausführung der erfindungsgemäßen Vorrichtung sind also neben dem Leistungsteiler, den Polarisationskonverter, dem Ausgangskoppler und den Wellenleitern auch die Fotodioden als integrierte Bauelemente realisiert. Denkbar ist auch eine nur teilweise monolithische Ausführung, bei der beispielsweise zumindest der Ausgangskoppler und die seinen Ausgängen zugeordneten Fotodioden monolithisch integriert ausgeführt sind.

Denkbar ist, dass die Vorrichtung zusätzlich zu den Fotodioden lediglich zwei unterschiedliche passiv-optische Baublöcke aufweist, nämlich die den Leistungsteiler und den Ausgangskoppler, die wie erwähnt jeweils in Form eines MMIs ausgebildet sein können, und die Polarisationskonverter. Die voll monolithisch Ausführung ermöglicht z.B. hohe Messgeschwindigkeiten im $n \times 10$ Gs/s-Bereich. Beispielsweise ist die Messgeschwindigkeit neben der Bandbreite einer Verarbeitungselektronik nur durch die Bandbreite der Fotodioden begrenzt. Mit Hilfe von monolithisch (wellenleiter-)integrierten Fotodioden können Bandbreiten von mehr als 100 GHz erreicht werden.

Möglich ist jedoch auch eine hybride Ausgestaltung der erfindungsgemäßen Vorrichtung, wobei z.B. die Wellenleiter in Form von Polymerwellenleitern ausgebildet sind und/oder die Fotodioden per Flip-Chip-Technologie angebondet sind.

Des Weiteren können die Polarisationskonverter jeweils eine Veränderung der Phasendifferenz $\Delta$ zwischen dem TE- und dem TM-Anteil der jeweiligen Teilwelle bewirken, wobei die Veränderungen der Phasendifferenzen insbesondere unterschiedlich sind. So kann der erste Polarisationskonverter eine andere Veränderung der Phasendifferenz $\Delta$ hervorrufen als der zweite und/oder der dritte Polarisationskonverter.

Zudem können die Polarisationskonverter in unterschiedlichen Abständen von dem Ausgangskoppler angeordnet sein. Der gewünschte Abstand wird so bestimmt (z.B. mit Hilfe eines numerischen Verfahrens), dass die Intensität der aus dem Ausgangskoppler austretenden Ausgangslichtwellen jeweils (insbesondere linear) abhängig von einem der Stokes-Parameter der Eingangslichtwelle ist, wie oben bereits erläutert. Denkbar ist allerdings auch, dass zumindest zwei der Polarisationskonverter in zumindest näherungsweise demselben Abstand zum Ausgangskoppler angeordnet sind.

Die Erfindung betrifft auch ein Verfahren zur Bestimmung eines Polarisationszustandes einer elektromagnetischen Welle, mit den Schritten:

- Aufteilen einer elektromagnetischen Eingangswelle in mindestens drei Teilwellen;
- Verändern des Polarisationszustandes der Teilwellen mit Hilfe dreier Polarisationskonverter, wobei jeweils einer der Polarisationskonverter einer der drei Teilwellen zugeordnet ist; und
- Erzeugen von Ausgangswellen mit Hilfe eines Ausgangskopplers, wobei der Ausgangskoppler, dem die Teilwellen nach Durchlaufen des jeweiligen Polarisationskonverters zugeführt werden und der mindestens drei Ausgänge aufweist, so ausgebildet und die Polarisationskonverter derart angeordnet und konfiguriert sind, dass die aus den Ausgängen des Ausgangskopplers austretenden Ausgangswellen eine Intensität aufweisen, die jeweils (z.B. linear) abhängig von einem der Stokes-Parameter der Eingangswelle sind.

Die oben in Bezug auf die erfindungsgemäße Vorrichtung erläuterten Ausführungsbeispiele können analog natürlich auch zur Weiterbildung des erfindungsgemäßen Verfahrens verwendet werden.

Die Erfindung wird im Folgenden anhand von Ausführungsbeispielen unter Bezugnahme auf die Figuren näher erläutert. Es zeigen:

Figur 1    ein Blockdiagramm einer Vorrichtung zum Bestimmen eines Polarisationszustandes einer elektromagnetischen Welle (in Form einer Lichtwelle) gemäß einem Ausführungsbeispiel der Erfindung;

Figur 2    schematisch eine Vorrichtung gemäß einem weiteren Ausführungsbeispiel der Erfindung: und

Figur 3    eine Verallgemeinerung der Figur 2.

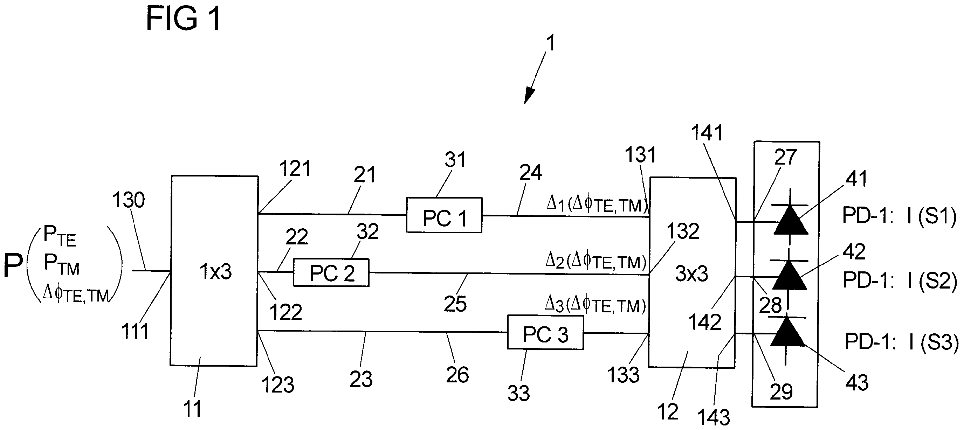

Die in Figur 1 dargestellte erfindungsgemäße Vorrichtung 1 umfasst einen Leistungsteiler in Form eines Eingangs-MMIs 11. Der Eingangs-MMI 11 ist als ein 1x3-MMI ausgebildet und weist entsprechend einen Eingang 111 und drei Ausgänge 121, 122, 123 auf. Über den Eingang 111 wird eine in einem Eingangswellenleiter 130 geführte Eingangslichtwelle in den Eingangs-MMI 11 eingekoppelt. Die Leistung P (entsprechend die Intensität) der Eingangslichtwelle hängt von den Stokes-Parametern S1, S2, S3 und damit von der Leistung $P_{TE}$ in dem TE-Anteil $E_{TE}$ der Eingangslichtwelle, der Leistung $P_{TM}$ in ihrem TM-Anteil $E_{TM}$ der und der Differenz $\Delta$ zwischen der Phase $\Phi_{TE}$ des TE-Anteils $E_{TE}$ und der Phase $\Phi_{TM}$ des TM-Anteils $E_{TM}$ ab.

Die aus den Ausgängen 121, 122, 123 des Eingangs-MMIs 11 auskoppelnden Teillichtwellen, die jeweils zumindest näherungsweise ein Drittel der Intensität der Eingangslichtwelle aufweisen, werden über Wellenleiter 21, 22, 23 jeweils zu einem Polarisationskonverter (PC 1, PC 2, PC 3) 31, 32, 33 geführt. Die aus den Polarisationskonvertern 31, 32, 33 austretenden Teillichtwellen wiederum werden jeweils über weitere Wellenleiter 24, 25, 26 zu einem Ausgangskoppler in Form eines Ausgangs-MMIs 12 geleitet. Bei dem Ausgangs-MMI 12 handelt es sich um einen 3×3-Koppler, d.h. um einen Koppler, der drei Eingänge 131, 132, 133 und drei Ausgänge 141, 142, 143 aufweist. Die aus den Ausgängen 141, 142, 143 des Ausgangs-MMIs 12 austretenden drei Ausgangslichtwellen werden über Ausgangswellenleiter 27, 28, 29 jeweils einer Fotodiode (PD-1, PD-2, PD-2) 41, 42, 43 zugeführt.

Die Polarisationskonverter 31, 32, 33 verändern jeweils den Polarisationszustand der Teilwellen, wobei sich jeweils nach Durchlaufen der Polarisationskonverter 31, 32, 33 unterschiedliche Veränderungen $\Delta 1$, $\Delta 2$ und $\Delta 3$ der Differenz $\Delta$ zwischen der Phase des TE- und des TM-Anteils der Teilwellen ergeben. Darüber hinaus ist das Ausgangs-MMI 12 so dimensioniert und die Polarisationskonverter 31, 32, 33 sind in einem derartigen Abstand zu ihm platziert, dass die Intensität des aus den Ausgängen 141, 142, 143 des Ausgangs-MMIs 12 und durch die Fotodioden 41, 42, 43 detektierten Lichtes jeweils (insbesondere linear) abhängig von einem (zum Beispiel von genau einem) der Stokes-Parameter S1, S2, S3 der Eingangslichtwelle ist. So ist beispielsweise die Intensität der mit der Fotodiode 41 detektierten Ausgangslichtwelle proportional zur Summe aus den Stokes-Parametern S1 und S0, die mit der zweiten Fotodiode 42 detektierte Intensität der zweiten Ausgangslichtwelle proportional zur Summe aus den Stokes-Parametern S2 und S0 und die mit der dritten Fotodiode 43 detektierte Intensität der dritten Ausgangslichtwelle proportional zur Summe aus den Stokes-Parametern S3 und S0.

Mit Hilfe des Ausgangs-MMIs 12 und der korrekten Platzierung der Polarisationskonverter 31, 32, 33 relativ zu dem Ausgangs-MMI 12 können die Stokes-Parameter S1, S2, S3 unmittelbar aus den Intensitäten der Ausgangslichtwellen, d.h. aus dem Signal der Fotodioden in 41, 42, 43, gewonnen werden, ohne dass ein Polarisationsfilter den Fotodioden 41, 42, 43 vorgeschaltet werden muss. Die Abstände der Polarisationskonverter 31, 32, 33 von dem Ausgangs-MMI 12 und ggf. auch von dem Eingangs-MMI 11 können insbesondere unter Berücksichtigung der Geometrie des Ausgangs-MMI 12 mit Hilfe eines numerischen Verfahren bestimmt werden, d.h. durch Berechnung eines Modells umfassend insbesondere die Polarisationskonverter 31, 32, 33, die Wellenleiter 21, 22, 23 und/oder 24, 25, 26 und das Ausgangs-MMI 12.

Bei der in der Figur 1 dargestellten erfindungsgemäßen Vorrichtung 1 handelt es sich um ein monolithisch integriertes Bauteil, das insbesondere eine zumindest im Wesentlichen planare Geometrie besitzt. Entsprechend sind sämtliche in der Figur gezeigten Komponenten, insbesondere die MMIs 11, 12, die Wellenleiter 130, 121-123, 131-133, 141-143 sowie die Fotodioden 41, 42, 43 auf einem gemeinsamen Substrat (nicht dargestellt) angeordnet und durch Strukturierung von auf diesem Substrat angeordneten Materialschichten realisiert. Bei den Fotodioden 41, 42, 43 handelt es sich z.B. um wellenleiterintegrierte Fotodioden.

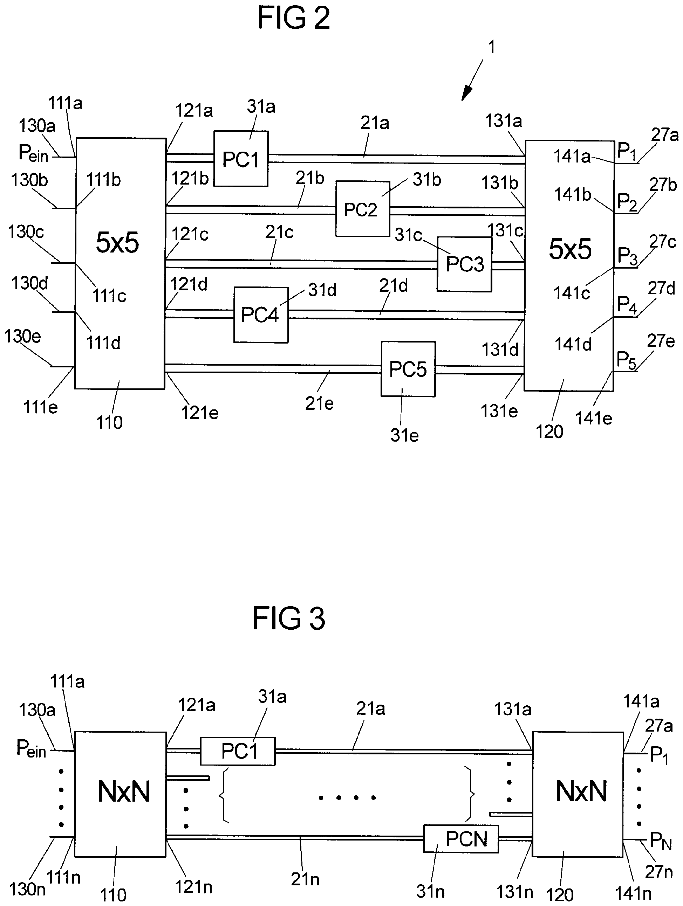

Figur 2 betrifft eine Abwandlung der Figur 1, wonach als Eingangs-Leistungsteiler ein 5×5-Koppler verwendet wird; insbesondere in Form eines 5×5-MMIs 110. Der Eingangs-MMI 110 weist entsprechend fünf Eingänge 111a-e und fünf Eingangswellenleiter 130a-e auf. Eine über einen (zum Beispiel über den oberen Wellenleiter 130a) dieser Eingangswellenleiter 130a-e eingekoppelte Lichtwelle wird in fünf Teilwellen aufgeteilt, die jeweils über Wellenleiter 21a-e einem Polarisationskonverter 31a-e zugeführt werden.

Als Ausgangskoppler wird ein 5×5-Ausgangs-MMI 120 verwendet, der entsprechend fünf Eingänge 131a-e und fünf Ausgänge 141a-e besitzt. Die Ausgänge 141a-e sind mit jeweils einem Ausgangswellenleiter 27a-e gekoppelt, über die Ausgangslichtwellen mit der Ausgangsleistung $P_1$-$P_5$ jeweils einer in Figur 2 nicht dargestellten Fotodiode zugeleitet werden. Analog zu Figur 1 sind die Polarisationskonverter 31a-e so relativ zu dem Ausgangs-MMI 120 positioniert, dass die Intensität der über die Ausgänge 141a-e aus dem Ausgangs-MMI 120 austretenden Lichtwellen jeweils von zumindest einem der Stokes-Parameter der Eingangslichtwelle (mit der Leistung $P_{ein}$) abhängig ist. Denkbar ist auch, dass die Intensitäten der aus dem Ausgangs-MMI 120 austretenden Lichtwellen zumindest teilweise von unterschiedlichen Kombinationen der Stokes-Parameter der Eingangslichtwelle anhängen.

Figur 3 betrifft eine Verallgemeinerung des Konzepts der Figur 3 auf die Verwendung eines N×N- Eingangsleistungsteilers und eines N×N- Ausgangskopplers.

## Patentansprüche

1. Vorrichtung zur Bestimmung eines Polarisationszustandes einer elektromagnetischen Welle, mit

   - einem Leistungsteiler (11), der eine elektromagnetische Eingangswelle in mindestens drei Teilwellen aufteilt; und
   - mindestens drei Polarisationskonvertern (31-33) zum Verändern des Polarisationszustandes der Teilwellen, wobei jeweils einer der Polarisationskonverter (31-33) einer der drei Teilwellen zugeordnet ist,

   **gekennzeichnet durch**
   einen Ausgangskoppler (12), dem die Teilwellen nach Durchlaufen des jeweiligen Polarisationskonverters (31-33) zugeführt werden und der mindestens drei Ausgänge (141, 142, 143) aufweist, wobei der Ausgangskoppler (12) so ausgebildet und die Polarisationskonverter (31-33) derart angeordnet und konfiguriert sind, dass aus den Ausgängen (141, 142, 143) des Ausgangskopplers (12) austretende Ausgangswellen eine Intensität aufweisen, die jeweils abhängig von einem der Stokes-Parameter (S1, S2, S3) der Eingangswelle sind.

2. Vorrichtung nach Anspruch 1, **dadurch gekennzeichnet, dass** die die aus dem Leistungsteiler (11) austretenden Teilwellen jeweils über einen Wellenleiter (21-22) in den zugehörigen Polarisationskonverter (31-33) eingekoppelt und/oder jeweils mit einem Wellenleiter (24-26) von dem Polarisationskonverter (21-22) zu dem Ausgangskoppler (12) geleitet werden.

3. Vorrichtung nach Anspruch 2, **dadurch gekennzeichnet, dass** es sich bei den Wellenleitern (21-22, 24-26) jeweils um optisch-integrierte Wellenleiter handelt.

4. Vorrichtung nach einem der Ansprüche 2 oder 3, **dadurch gekennzeichnet, dass** die Wellenleiter (21-22, 24-26) eine von Null verschiedene Doppelbrechung aufweisen.

5. Vorrichtung nach einem der vorhergehenden Ansprüche, **dadurch gekennzeichnet, dass** es sich bei der Vorrichtung (1) zumindest teilweise um ein monolithisch integriertes Bauelement handelt.

6. Vorrichtung nach Anspruch 5, **dadurch gekennzeichnet, dass** das Bauelement in III-V- oder SOI-Technologie realisiert ist.

7. Vorrichtung nach einem der vorhergehenden Ansprüche, **dadurch gekennzeichnet, dass** der Leistungsteiler (11) so ausgebildet ist, dass die aus ihm austretenden Teilwellen zumindest näherungsweise den gleichen Polarisationszustand und/oder Intensität aufweisen.

8. Vorrichtung nach einem der vorhergehenden Ansprüche, **dadurch gekennzeichnet, dass** es sich bei dem Leistungsteiler (11) um einen MMI-Koppler handelt.

9. Vorrichtung nach einem der vorhergehenden Ansprüche, **dadurch gekennzeichnet, dass** es sich bei dem Ausgangskoppler (12) um ein MMI-Koppler handelt.

10. Vorrichtung nach einem der vorhergehenden Ansprüche, **dadurch gekennzeichnet, dass** jedem Ausgang (141, 142, 143) des Ausgangskopplers (12) ein Empfänger (41, 42, 43) zum Empfang jeweils einer der Ausgangswellen zugeordnet ist.

11. Vorrichtung nach Anspruch 9, **dadurch gekennzeichnet, dass** die Empfänger (41, 42, 43) jeweils durch eine Fotodiode ausgebildet sind.

12. Vorrichtung nach einem der vorhergehenden Ansprüche, **dadurch gekennzeichnet, dass** die Polarisationskonverter (31-33) jeweils eine Veränderung der Phasendifferenz und der relativen Amplitude zwischen dem TE- und dem TM-Anteil der jeweiligen Teillichtwelle erzeugen, wobei die erzeugten Veränderungen der Phasendifferenzen unterschiedlich sind.

13. Vorrichtung nach einem der vorhergehenden Ansprüche, **dadurch gekennzeichnet, dass** die Polarisationskonverter (31-33) in unterschiedlichen Abständen zu dem Ausgangskoppler (12) angeordnet sind.

14. Vorrichtung nach einem der vorhergehenden Ansprüche, **dadurch gekennzeichnet, dass** die Intensitäten der Ausgangswellen linear abhängig von jeweils einem der Stokes-Parameter (S1, S2, S3) der Eingangswelle sind.

15. Verfahren zur Bestimmung eines Polarisationszustandes einer elektromagnetischen Welle, insbesondere unter Verwendung einer Vorrichtung (1) gemäß einem der vorhergehenden Ansprüche, mit den Schritten:

   - Aufteilen einer elektromagnetischen Eingangswelle in mindestens drei Teilwellen; und
   - Verändern des Polarisationszustandes der Teilwellen mit Hilfe dreier Polarisationskonverter (31-33), wobei jeweils einer der Polarisationskonverter (31-33) einer der drei Teilwellen zugeordnet ist,

   **gekennzeichnet durch**
   Erzeugen von Ausgangswellen mit Hilfe eines Ausgangskopplers (12), wobei der Ausgangskoppler (12), dem die Teilwellen nach Durchlaufen des jeweiligen Polarisationskonverters (31-33) zugeführt werden und der mindestens drei Ausgänge (141, 142, 143) aufweist, so ausgebildet und die Polarisationskonverter (31-33) derart angeordnet und konfiguriert sind, dass die aus den Ausgängen (141, 142, 143) des Ausgangskopplers (12) austretenden Ausgangswellen eine Intensität aufweisen, die jeweils abhängig von einem der Stokes-Parameter (S1, S2, S3) der Eingangswelle sind.

## Claims

1. A device for determining a polarization state of an electromagnetic wave, comprising

   - a power splitter (11) that splits an electromagnetic input wave into at least three partial waves; and
   - at least three polarization converters (31-33) for changing the polarization state of the partial waves, wherein one of the polarization converters (31-33) each is associated to one of the three partial waves,

   **characterized by**
   an output coupler (12) to which the partial waves are supplied after passing through the respective polarization converter (31-33) and which includes at least three outputs (141, 142, 143), wherein the output coupler (12) is configured such and the polarization converters (31-33) are arranged and configured in such a way that output waves exiting from the outputs (141, 142, 143) of the output coupler (12) have an intensity that each is dependent on one of the Stokes parameters (S1, S2, S3) of the input wave.

2. The device according to claim 1, **characterized in that** the partial waves exiting from the power splitter (11) each are coupled into the associated polarization converter (31-33) via a waveguide (21-22) and/or each are guided from the polarization converter (21-22) to the output coupler (12) by means of a waveguide (24-26).

3. The device according to claim 2, **characterized in that** the waveguides (21-22, 24-26) each are optically integrated waveguides.

4. The device according to any of claims 2 or 3, **characterized in that** the waveguides (21-22, 24-26) have a birefringence different from zero.

5. The device according to any of the preceding claims, **characterized in that** the device (1) at least partly is a monolithically integrated component.

6. The device according to claim 5, **characterized in that** the component is realized by III-V or SOI technology.

7. The device according to any of the preceding claims, **characterized in that** the power splitter (11) is configured such that the partial waves exiting from the same at least approximately have the same polarization state and/or intensity.

8. The device according to any of the preceding claims, **characterized in that** the power splitter (11) is an MMI coupler.

9. The device according to any of the preceding claims, **characterized in that** the output coupler (12) is an MMI coupler.

10. The device according to any of the preceding claims, **characterized in that** to each output (141, 142, 143) of the output coupler (12) a receiver (41, 42, 43) for receiving one of the output waves each is associated.

11. The device according to claim 9, **characterized in that** the receivers (41, 42, 43) each are formed by a photodiode.

12. The device according to any of the preceding claims, **characterized in that** the polarization converters (31-33) each produce a change of the phase difference and the relative amplitude between the TE fraction and the TM fraction of the respective partial light wave, wherein the produced changes of the phase differences are different.

13. The device according to any of the preceding claims, **characterized in that** the polarization converters (31 -33) are arranged at different distances to the output coupler (12).

14. The device according to any of the preceding claims, **characterized in that** the intensities of the output waves are linearly dependent each on one of the Stokes parameters (S1, S2, S3) of the input wave.

15. A method for determining a polarization state of an electromagnetic wave, in particular by using a device (1) according to any of the preceding claims, comprising:

   - splitting an electromagnetic input wave into at least three partial waves; and
   - changing the polarization state of the partial waves by means of three polarization converters (31 -33), wherein one of the polarization converters (31 - 33) each is associated to one of the three partial waves,

   **characterized by**
   generating output waves by means of an output coupler (12), wherein the output coupler (12) to which the partial waves are supplied after passing through the respective polarization converter (31-33) and which includes at least three outputs (141, 142, 143) is configured such and the polarization converters (31-33) are arranged and configured in such a way that the output waves exiting from the outputs (141, 142, 143) of the output coupler (12) have an intensity that each is dependent on one of the Stokes parameters (S1, S2, S3) of the input wave.

**Revendications**

1. Dispositif pour déterminer un état de polarisation d'une onde électromagnétique, comprenant

   - un diviseur de puissance (11), qui divise une onde électromagnétique d'entrée en au moins trois ondes partielles ; et
   - au moins trois convertisseurs de polarisation (31-33) pour modifier l'état de polarisation des ondes partielles, l'un des convertisseurs de polarisation (31-33) étant respectivement associé à l'une des trois ondes partielles,

**caractérisé par**

un coupleur de sortie (12) auquel les ondes partielles sont amenées après avoir traversé le convertisseur de polarisation respectif (31-33) et qui présente au moins trois sorties (141, 142, 143), le coupleur de sortie (12) étant conçu tellement et les convertisseurs de polarisation (31-33) étant agencés et configurés de telle sorte que des ondes de sortie sortant des sorties (141, 142, 143) du coupleur de sortie (12) présentent une intensité qui dépend respectivement d'un des paramètres de Stokes (S1, S2, S3) de l'onde d'entrée.

2. Dispositif selon la revendication 1, **caractérisé en ce que** les ondes partielles sortant du diviseur de puissance (11) sont couplées chacune par un guide d'ondes (21-22) dans le convertisseur de polarisation (31-33) associé et/ou sont guidées chacune par un guide d'ondes (24-26) du convertisseur de polarisation (21-22) vers le coupleur de sortie (12).

3. Dispositif selon la revendication 2, **caractérisé en ce que** les guides d'ondes (21-22, 24-26) dans chaque cas sont des guides d'ondes à intégration optique.

4. Dispositif selon l'une quelconque des revendications 2 ou 3, **caractérisé en ce que** les guides d'ondes (21-22, 24-26) présentent une biréfringence différente de zéro.

5. Dispositif selon l'une quelconque des revendications précédentes, **caractérisé en ce que** le dispositif (1) est au moins partiellement un composant intégré monolithiquement.

6. Dispositif selon la revendication 5, **caractérisé en ce que** le composant est réalisé en technologie III-V ou SOI.

7. Dispositif selon l'une quelconque des revendications précédentes, **caractérisé en ce que** le diviseur de puissance (11) est conçu de telle sorte que les ondes partielles qui en sortent présentent au moins approximativement le même état de polarisation et/ou la même intensité.

8. Dispositif selon l'une quelconque des revendications précédentes, **caractérisé en ce que** le diviseur de puissance (11) est un coupleur MMI.

9. Dispositif selon l'une quelconque des revendications précédentes, **caractérisé en ce que** le coupleur de sortie (12) est un coupleur MMI.

10. Dispositif selon l'une quelconque des revendications précédentes, **caractérisé en ce qu'**à chaque sortie (141, 142, 143) du coupleur de sortie (12) est associé un récepteur (41, 42, 43) pour recevoir respectivement l'une des ondes de sortie.

11. Dispositif selon la revendication 9, **caractérisé en ce que** les récepteurs (41, 42, 43) sont constitués chacun par une photodiode.

12. Dispositif selon l'une quelconque des revendications précédentes, **caractérisé en ce que** les convertisseurs de polarisation (31-33) produisent chacun un changement de la différence de phase et de l'amplitude relative entre les parties TE et TM de chaque onde lumineuse partielle, les changements produits des différences de phase étant différents.

13. Dispositif selon l'une quelconque des revendications précédentes, **caractérisé en ce que** les convertisseurs de polarisation (31-33) sont agencés à des distances différentes du coupleur de sortie (12).

14. Dispositif selon l'une quelconque des revendications précédentes, **caractérisé en ce que** les intensités des ondes de sortie sont linéairement dépendantes chacune d'un des paramètres de Stokes (S1, S2, S3) de l'onde d'entrée.

15. Procédé pour déterminer un état de polarisation d'une onde électromagnétique, en particulier en utilisant un dispositif (1) selon l'une quelconque des revendications précédentes, comprenant les étapes suivantes :

- la division d'une onde électromagnétique d'entrée en au moins trois ondes partielles ; et
- le changement de l'état de polarisation des ondes partielles au moyen de trois convertisseurs de polarisation (31-33), chacun des convertisseurs de polarisation (31-33) étant respectivement associé à l'une des trois ondes partielles,

**caractérisé par**

la génération d'ondes de sortie au moyen d'un coupleur de sortie (12), le coupleur de sortie (12) auquel les ondes partielles sont amenées après avoir traversé le convertisseur de polarisation respectif (31-33) et qui présente au moins trois sorties (141, 142, 143) étant conçu tellement et les convertisseurs de polarisation (31-33) étant agencés et configurés de telle sorte que les ondes de sortie sortant des sorties (141, 142, 143) du coupleur de sortie (12) présentent une intensité qui dépend respectivement d'un des paramètres de Stokes (S1, S2, S3) de l'onde d'entrée.

# FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **S. GHOSH et al.** Integrated Stokes Vector Analyzer on InP. *21st OptoElectronics and Communications Conference (OECC),* 2016

- **S. GHOSH et al.** Polarization-analyzing circuit on InP for integrated Stokes vector receiver. *OPTICS EXPRESS,* 29. Mai 2017, vol. 25 (11), 12303